Europäisches Patentamt

European Patent Office

Office européen des brevets

(19)

(11) Veröffentlichungsnummer: **0 043 452**
**B1**

# (12) EUROPÄISCHE PATENTSCHRIFT

(45) Veröffentlichungstag der Patentschrift:
**10.10.84**

(21) Anmeldenummer: **81104342.1**

(22) Anmeldetag: **05.06.81**

(51) Int. Cl.³: **F 04 D 27/00**, F 04 D 29/56

(54) **Vorrichtung zur Regelung von Axialverdichtern.**

(30) Priorität: **08.07.80 DE 3025753**

(43) Veröffentlichungstag der Anmeldung:
**13.01.82 Patentblatt 82/2**

(45) Bekanntmachung des Hinweises auf die Patenterteilung:
**10.10.84 Patentblatt 84/41**

(84) Benannte Vertragsstaaten:
**CH FR GB IT LI SE**

(56) Entgegenhaltungen:
**FR - A - 2 123 831**

(73) Patentinhaber: **MANNESMANN Aktiengesellschaft, Mannesmannufer 2, D-4000 Düsseldorf 1 (DE)**

(72) Erfinder: **Dittié, Bernhard, Dipl.-Ing., Merowinger Strasse 39, D-4130 Moers 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft eine Vorrichtung zur Regelung von Axialverdichtern durch Verstellung von zwei in Strömungsrichtung hintereinander liegenden Leitschaufelreihen mit — bezogen auf ihre Längsachsen — symmetrischem Profil und mit in ihrer Neutralstellung (Schaufelstellung bei 0° Abweichung von der Strömungsrichtung) parallel zur Rotorachse eingestellten, jeweils um eine gehäusefeste Schaufeldrehachse (Schaufelmitte) drehbar angeordneten Leitschaufeln, wobei die Leitschaufeln der in Strömungsrichtung vorderen (ersten) Leitschaufelreihe gegenüber den Leitschaufeln der in Strömungsrichtung nachfolgenden (zweiten) Leitschaufelreihe mit Hilfe eines Verstellringes oder dergleichen mit einem voreilenden Einstellwinkel verstellbar sind und wobei dem jeweiligen Einstellwinkel der Schaufeln der einen Leitschaufelreihe ein zu diesem Winkel in einem bestimmten Verhältnis stehender Einstellwinkel der Schaufeln der anderen Leitschaufelreihe zugeordnet ist und — in Umfangsrichtung gesehen — jeweils zwischen zwei benachbarten Leitschaufeln der ersten Leitschaufelreihe eine Leitschaufel der zweiten Leitschaufelreihe angeordnet ist.

Eine derartige Vorrichtung ist durch die FR-A-2 123 831 bekannt.

Bei der Regelung von Axialverdichtern durch Verstellen der Leitschaufeln spielt die Eintrittsstufe eine besondere Rolle. Während die Zuströmrichtung zu Leitschaufeln zwischen je zwei Laufrädern durch Regelung der vorangehenden Stufen bereits im Regelsinne geändert wird, bleibt sie für das Eintrittsleitrad konstant axial. Von einem bestimmten Verstellwinkel an ist die Strömung im Eintrittsleitrad abgerissen, das folgende Laufrad wird hierdurch ebenfalls in seiner Wirkungsweise beeinträchtigt. Eine Berechnung der zusätzlichen Verluste im Eintrittsleitrad und im ersten Laufrad zeigt deutlich, daß nach Strömungsabriß im Eintrittsleitrad ein positiver Regeleffekt in Gegendrallrichtung nicht mehr zustande kommt, im Teillastbereich eine Regellücke auftritt, in der die Strömungsumlenkung kleiner ist als vor dem Strömungsabriß, der Wirkungsgrad der ersten Stufe stark beeinträchtigt wird und die Leitschaufeln stark fluktuierenden Kräften ausgesetzt sind.

Bei den geläufigen Turboverdichtern bildet die erste Schaufelreihe das Eintrittsleitrad. Diesem Eintrittsleitrad kann im Gegensatz zu den übrigen Leiträdern, die sich jeweils zwischen zwei Laufrädern befinden, eine Sonderstellung eingeräumt werden:

— Der Verstellbereich für die Schaufeln des Eintrittsleitrades soll innerhalb des normalen Regelbereichs der Maschine möglichst nur so groß sein, daß Strömungsabriß nicht eintritt.

— Die für einen bestimmten Eintrittsleitrad erzeugten Vordrall geltende Verstellkennlinie des ersten Laufrades kann dabei zwischen Abreiß- und Schluckgrenze ausgenutzt werden.

Die Zuströmgeschwindigkeit zu den Schaufeln des Eintrittsleitrades ist immer im wesentlichen axial gerichtet.

Wenn beim Regeln des Verdichters durch Leitschaufelverstellung die Schaufeln des Eintrittsleitrades verstellt werden, dann müssen sie immer den Strom aus der Axialrichtung in eine andere Richtung umlenken, teilweise in Richtung der Rotation des Verdichterläufers (Mitdrall) und teilweise dieser Richtung entgegengesetzt (Gegendrall).

Wie bereits gesagt, reißt beim Überschreiten eines bestimmten Anströmwinkels die Strömung zum Profil ab.

In der einen Regelrichtung, die in den Teillastbereich führt (zunehmender Mitdrall), kommt es beim Überschreiten dieses Strömungsreißwinkels zu zusätzlichen Verlusten, die sich zunächst äußerlich in der Verdichterstufe oder im Gesamtverdichter nicht bemerkbar machen. Die Erhöhung der Verluste kann nämlich mit einer Drosselung verglichen werden, einem Effekt, der zwar unerwünscht ist, jedoch in der gewünschten Regelrichtung wirkt.

Wenn aber in der anderen Richtung, also in dem Überlastbereich, geregelt wird, macht sich das Strömungsabreißen äußerlich bemerkbar, nämlich durch eine plötzliche Umkehr des Regeleffektes. Statt daß der Massendurchsatz durch die Maschine und auch das Druckverhältnis vergrößert werden, tritt von einem bestimmten Grenzwinkel an der gegenteilige Effekt ein. Durch die abgelösten Strömungsgebiete, die sehr stark verwirbelt sind, entstehen nicht nur in dem Eintrittsleitrad, sondern vor allen Dingen in dem folgenden Laufrad zusätzliche Verluste, so daß der angestrebte Effekt nicht nur zunichte gemacht wird, sondern sogar ins Gegenteil verkehrt wird.

Bisher hat man sich bekanntlich zum Teil dadurch geholfen, daß in vielstufigen Maschinen die Schaufeln des Eintrittsleitrades um einen kleineren Winkel verstellt werden als z. B. die Schaufeln des ersten Mittenleitrades, das zwischen dem ersten und zweiten Laufrad angeordnet ist.

Die FR-PS 2 123 831 zeigt eine Vorrichtung zum differenziert gekoppelten Verstellen von zwei in Strömungsrichtung hintereinander liegenden Leitschaufelreihen eines Turboverdichters.

Bei der Schaufelverstellung nur in einer Richtung werden hierbei asymmetrische Profile verwendet, wogegen bei der Regelung in beiden Richtungen nur symmetrische Profile angewandt werden.

Eine derartige Verstellung der Leitschaufeln der beiden Schaufelreihen in beiden Verstellrichtungen (positiver und negativer Drall), daß die sich gegenseitig überdeckenden Schaufelbereiche Kanäle bilden, die eine Beschleunigung der Strömung bewirken, ist bei dieser bekannten Vorrichtung nicht möglich.

Anders ausgestaltete Vorrichtungen dieser Art zeigen z. B. die DE-A-2 403 113 und DE-A-2 502 986. Bei diesen Vorrichtungen sind die Leitschaufelreihen in Strömungsrichtung hintereinander radial zur Richtung der Rotorachse angeordnet. Die Drehpunkte der in Strömungsrichtung jeweils hintereinander angeordneten Leitschaufeln liegen auf parallel zur Rotorachse verlaufenden Linien.

Bei dieser Anordnung der Schaufeln kann jedoch bei einer maximalen Strömungsumlenkung in dem einen oder dem anderen Regelungssinn kein aerodynamisch optimaler Spalt zwischen den zusammenwirkenden Schaufeln bzw. keine optimale Strömung erreicht werden.

Es sind ferner Vorrichtungen zur Regelung von Strömungsmaschinen durch Verstellungen von Leitschaufeln bekannt, wobei diese Leitschaufeln keine starre Form sondern ein gegliedertes Profil aufweisen. Dadurch können sehr günstige aerodynamische Verhältnisse herbeigeführt werden. Solche Konstruktionen sind in den NASA-Berichten TND-3823 vom Januar 1967 und CR-54 534 PWAFR-2112 vom 2. August 1968 der National Aeronautics and Space Administration, Washington D. C., beschrieben.

Aus diesen Berichten sind z. B. folgende Konstruktionen bekannt:

— Anordnung von zweiteiligen Schaufeln, die aus einer feststehenden Flosse und einem angelenkten Ruder bestehen,
— ein Ruder, das mit einem Spalt versehen ist,
— eine Flosse mit verwölbtem hinterem Teil,
— in mehrere Elemente aufgelöstes Ruder.

Diese mehrgliedrigen Schaufeln bringen zwar den gewünschten Effekt, stellen jedoch konstruktiv sehr komplizierte Gebilde dar.

Somit ist es Aufgabe der Erfindung, die Regelwirksamkeit des Eintrittsleitrades unter Vermeidung oder Hinauszögerung des Strömungsabrisses mit möglichst einfachen Mitteln zu vergrößern. Diese Aufgabe wird erfindungsgemäß durch die Merkmale des Kennzeichenteils des Patentanspruchs 1 gelöst. Eine vorteilhafte Weiterbildung der Erfindung ist in dem Unteranspruch enthalten.

Durch die Erfindung wurde eine sehr einfache Konstruktion geschaffen. Dank der Anordnung der Leitschaufeln kann die Spaltwirkung in den beiden Endlagen optimiert werden, während zwischen diesen Endlagen der Spalt immer noch wirksam ist, wenn auch nicht optimal.

Versuche zeigten, daß mit der erfindungsgemäßen Vorrichtung ein wesentlich verbessertes Regelverhalten im Teillastbereich sowie im Überlastbereich erreicht wurde. Die Regelwirksamkeit des Eintrittsleitrades hat sich durch Vermeidung oder Hinauszögerung des Strömungsabrisses vergrößert. Dadurch hat sich der Wirkungsgrad erhöht; vor allen Dingen ist es aber durch die Vermeidung oder Hinauszögerung des Strömungsabrisses möglich geworden, den Überbelastbereich zu erweitern. Während bisher durch abgelöste Strömung in den Eintrittsleiträdern die Regelwirksamkeit umgekehrt wird und diese Erscheinung nur bei Verwendung der erwähnten, sehr komplizierten Konstruktionen vermieden werden konnte, erreicht die Erfindung die angestrebte Regelwirksamkeit mit sehr einfachen technischen Maßnahmen.

Ebenso ist die Konstruktion des Verstellringes wesentlich vereinfacht und bringt den Vorteil, daß die Winkelzuordnung, um die die Schaufelreihen verdreht werden, durch die Länge der Hebel bestimmt werden kann.

In den Zeichnungen sind Ausführungsbeispiele der Erfindung dargestellt. Es zeigt

Fig. 1 eine schematische Draufsicht der Schaufelanordnung auf einer abgewickelten Schaufelradfläche,

Fig. 2 einen Teil der Schaufelanordnung in perspektivischer Darstellung in der Neutralstellung,

Fig. 3 die Schaufeln nach Fig. 2 in einer Drallstellung,

Fig. 4 die Schaufeln nach Fig. 2 in einer anderen Drallstellung, und

Fig. 5 die Schaufeln nach Fig. 2 mit einem Teil eines Verstellringes in perspektivischer Darstellung.

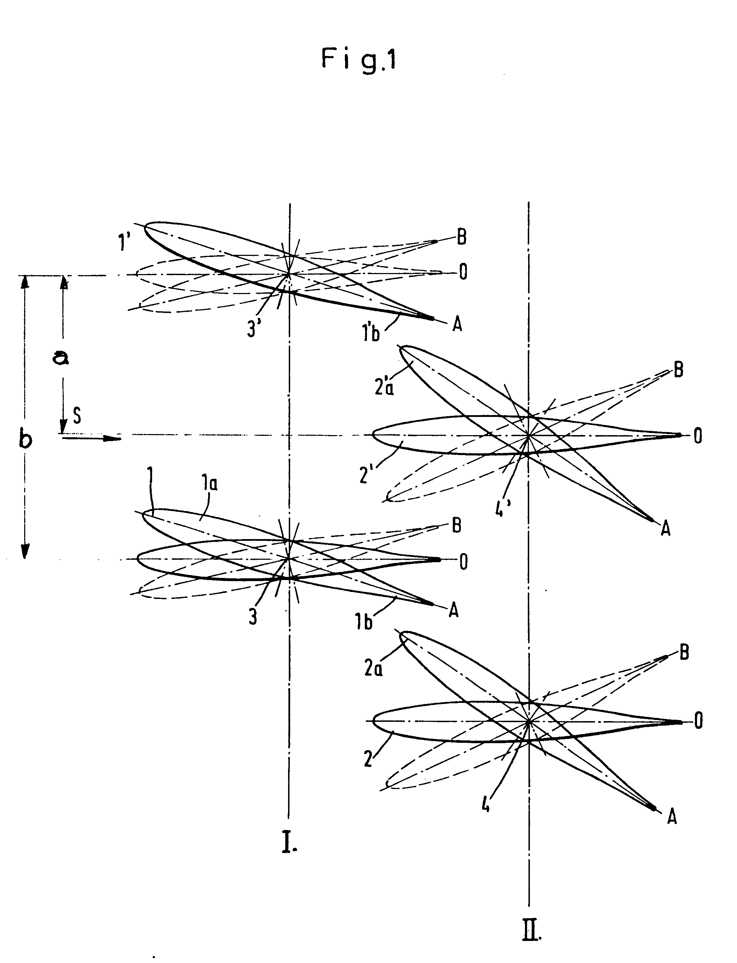

Wie aus Fig. 1 ersichtlich ist, sind zwei hintereinander angeordnete Leitschaufelreihen I und II (Tandemanordnung) vorgesehen. Die Strömung kommt von der mit einem Pfeil S bezeichneten Seite her. Bei der Betrachtung geht man davon aus, daß man in der einen Regelrichtung einen bestimmten Umlenkwinkel als Maximum erzeugt, während man sich in der anderen Regelrichtung als Maximum einen anderen Umlenkwinkel vorstellt.

Die Leitschaufeln der ersten Schaufelreihe I sind mit 1 bzw. 1' bezeichnet. Sie sind um die Drehachse 3 bzw. 3' drehbar angeordnet. Die Anordnung der Leitschaufeln 2, 2' mit den Drehachsen 4 bzw. 4' ist analog der Anordnung der ersten Schaufelreihe I.

In der Zeichnung sind drei Stellungen jeder Schaufel angedeutet: 0 ist die Neutralstellung, wobei die Sehnen der Schaufelprofile in der Strömungsrichtung liegen; mit A bzw. B sind die Drallstellungen (»positiver« Drall und »negativer« Drall) bezeichnet. Die Verstellwinkel der Schaufelreihe II sind zunächst größer als die Winkel der Schaufelreihe I. Dem jeweiligen Einstellwinkel der Leitschaufeln der Reihe I ist ein in einem bestimmten Verhältnis zu diesem Winkel stehender Einstellwinkel der Leitschaufeln der Schaufelreihe II zugeordnet. Dieses Verhältnis ist durch die Konstruktion des Verstellringes gegeben, wie später ausführlich erläutert wird.

In dem dargestellten Beispiel sind die Sehnenlängen der Schaufeln 1 bzw. 1' gleich den Sehnenlängen der Schaufeln 2 bzw. 2'. Die Sehnenlängen können aber auch unterschiedlich sein.

Wie aus Fig. 1 ferner ersichtlich ist, weisen die Leitschaufeln mindestens einer der Leitschaufelreihen I, II, bezogen jeweils auf ihre Längsachsen, ein symmetrisches Profil auf.

Das Verhältnis zwischen dem gegenseitigen Abstand a zweier benachbarter Leitschaufelmitten 3', 4' der ersten I und der zweiten II Leitschaufelreihe und dem Abstand b zweier benachbarter Leitschaufelmitten 3', 3 der Leitschaufel der ersten Leitschaufelreihe I — jeweils in Umfangsrichtung gesehen — ist größer als 1 : 2.

Bei positiven Drall A bildet der Hinterkantenbereich 1b; 1'b einer Leitschaufel 1, 1' der ersten Leitschaufelreihe I mit dem Nasenbereich 2a, 2'a einer Leitschaufel 2, 2' der zweiten Leitschaufelreihe II durch gegenseitige Überdeckung jeweils einen Kanal, der eine Beschleunigung der Strömung bewirkt.

Bei negativem Drall B bildet der Hinterkantenbereich 1b einer Leitschaufel I der ersten Leitschaufelreihe I mit dem Nasenbereich 2'a einer Leitschaufel 2' der zweiten Leitschaufelreihe II durch gegenseitige Überdeckung ebenfalls jeweils einen Kanal, der eine Beschleunigung der Strömung bewirkt.

Die Leitschaufeln sind also so angeordnet, daß — betrachtet senkrecht zur Richtung der Rotorachse — in Stellung »A« der Nasenbereich 2a der Leitschaufel 2 sich mit dem Hinterkantenbereich 1b der benachbarten Leitschaufel 1 der ersten Schaufelreihe I überdeckt.

Analog ist die gegenseitige Einstellung der Schaufeln 1' und 2' usw.

Bei der Durchströmung des Spaltes zwischen den in Position A bzw. B eingestellten Schaufeln 1, 2; 1', 2' usw. entsteht ein Effekt, der dem Nasen- und Ladeklappeneffekt eines Flugzeugflügels ähnlich ist. Damit wird die optimale Durchströmung der Schaufeln gewährleistet.

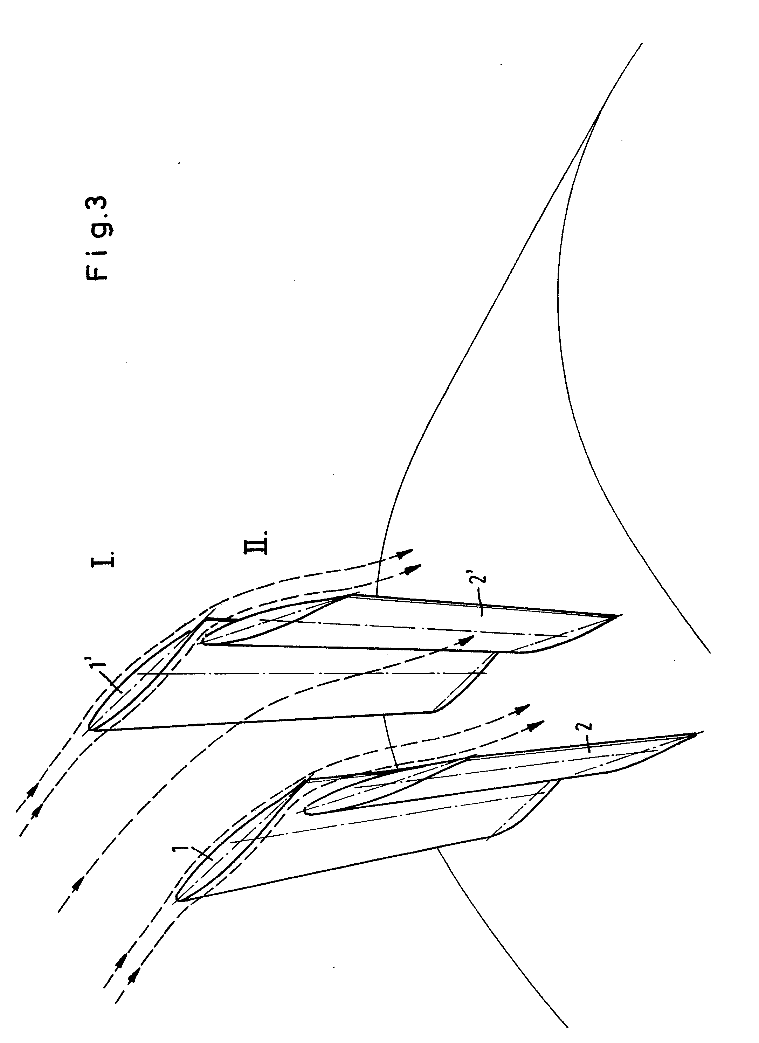

Ein Teil des Leitschaufelkranzes mit auf »positiven« Drall A eingestellten Schaufeln 1, 2 und 1', 2' ist außerdem in Fig. 3 perspektivisch dargestellt.

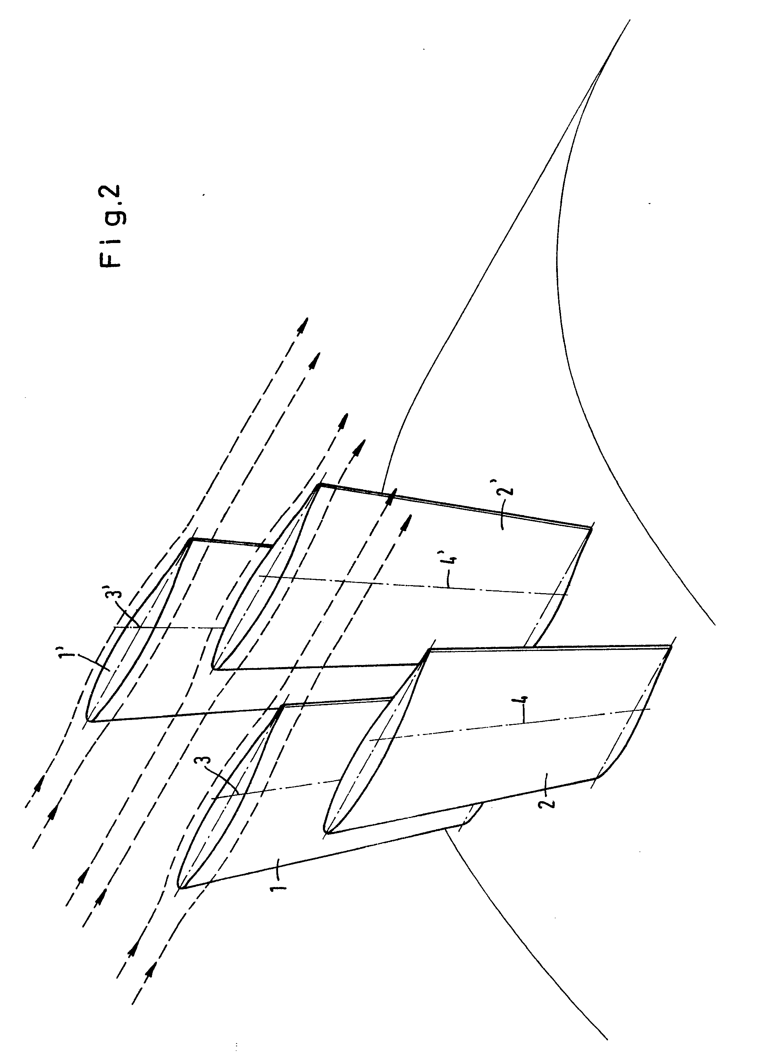

Fig. 2 zeigt einen Teil des Leitschaufelkranzes mit in Neutralposition eingestellten Schaufeln (vergl. Fig. 1, Stellung »0«). Dabei liegen die Sehnen der Schaufeln 1, 2; 1', 2' zueinander sowie zur Rotorachse parallel. Die Schaufeln werden im wesentlichen parallel zur Rotorachse durchströmt.

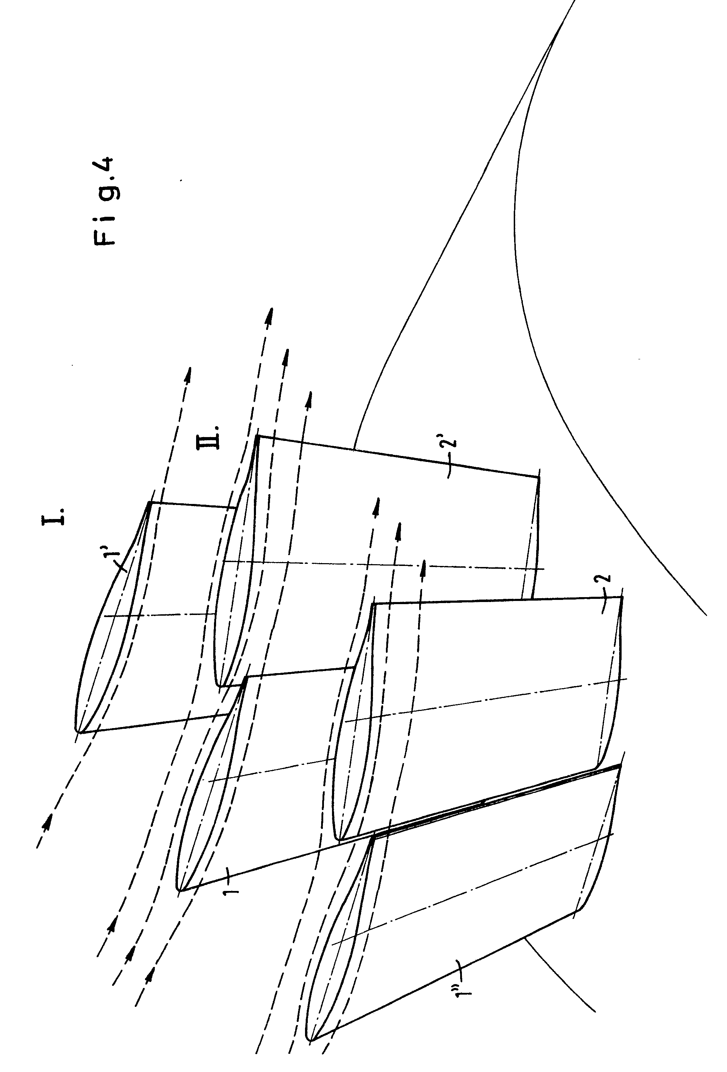

Fig. 4 zeigt in perspektivischer Darstellung die auf »negativen« Drall (vergl. Fig. 1, Position »B«) eingestellten Schaufeln 1, 2'; 1'', 2 mit angedeuteten Strömungslinien. In dieser eingestellten Lage überdeckt sich — in Richtung senkrecht auf die Rotorachse gesehen — jeweils der Hinterkantenbereich der Schaufel 1'' bzw. 1 mit dem Nasenbereich der Schaufel 2 bzw. 2'.

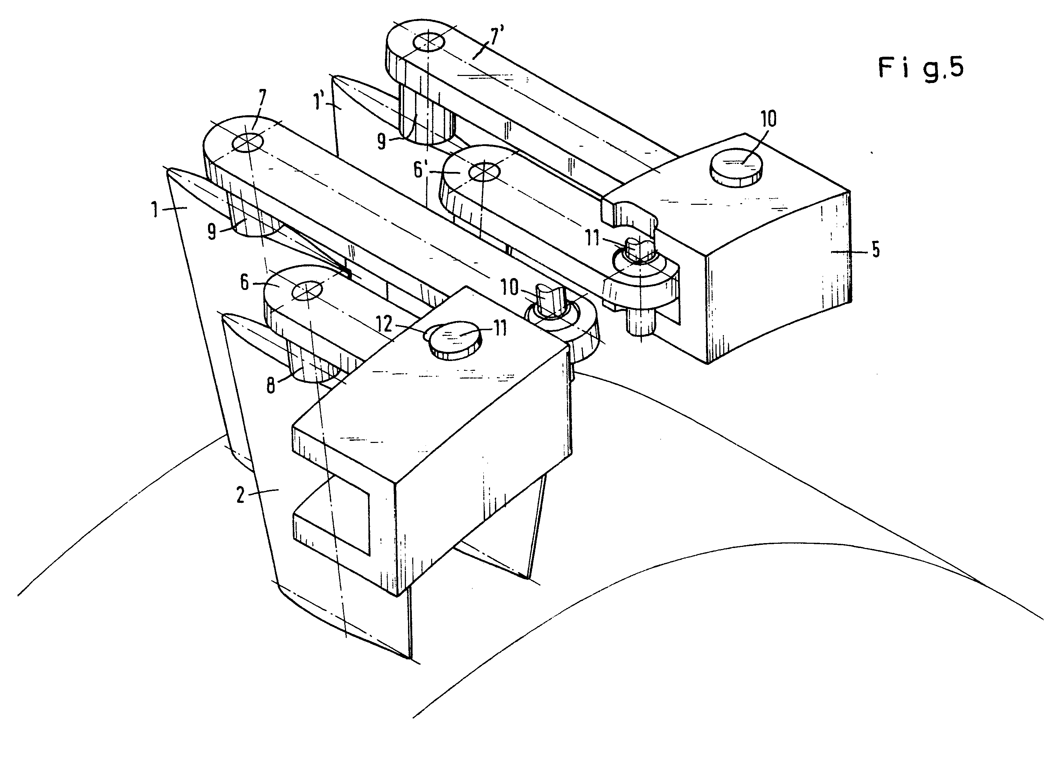

Der Leitschaufel-Verstellmechanismus wird im nachfolgenden anhand der Fig. 5 erläutert. In der gezeichneten Stellung stehen die Schaufeln, 1, 2; 1', 2' in Neutralposition.

Die Schaufeln sind jeweils über Schäfte 9 (Schaufel 1 und 1') bzw. 8 (Schaufel 2 und 2') mit Hebeln 7 (7') bzw. 6 (6') fest verbunden. Die Schäfte 8 und 9 sind in einem nicht dargestellten Gehäuse gelenkig gelagert.

Auf die gleiche Weise wie die dargestellten Schaufeln 1 bzw. 1' und 2 sowie die Lagerungen und Hebel sind sämtliche Schaufeln der beiden Schaufelreihen I und II des Leitschaufelkranzes ausgestaltet.

Die Schaufeln werden über einen teilweise dargestellten Verstellring 5 verstellt.

Die Lagerung der Hebel 6 und 7 im Verstellring 5 erfolgt über Wellen 11 bzw. 10. Für die Wellen 11 sind am Verstellring 5 ovale, sich in Richtung der Rotorachse erstreckende Öffnungen 12 vorgesehen.

Aus Fig. 5 ist ersichtlich, daß das Verhältnis des Verstellwinkels der ersten Schaufelreihe I mit Schaufeln 1, 1' usw. zu dem Verstellwinkel der zweiten Schaufelreihe II mit den Schaufeln 2, 2' usw. durch das Verhältnis der Hebellänge 6 zur Hebellänge 7 bestimmt ist. Durch die Hebellängen wird also die Zuordnung der Winkel zueinander bestimmt, und zwar in einem ganz bestimmten Verhältnis.

**Patentansprüche**

1. Vorrichtung zur Regelung von Axialverdichtern durch Verstellung von zwei in Strömungsrichtung hintereinander liegenden Leitschaufelreihen (I, II) mit — bezogen auf ihre Längsachsen — symmetrischem Profil und mit in ihrer Neutralstellung (Schaufelstellung bei 0° Abweichung von der Strömungsrichtung) parallel zur Rotorachse eingestellten, jeweils um eine gehäusefeste Schaufeldrehachse (3, 3', 4, 4') (Schaufelmitte) drehbar angeordneten Leitschaufeln (1, 1', 2, 2'), wobei die Leitschaufeln (1, 1') der in Strömungsrichtung vorderen (ersten) Leitschaufelreihe (I) gegenüber der Leitschaufeln (2, 2') der in Strömungsrichtung nachfolgenden (zweiten) Leitschaufelreihe (II) mit Hilfe eines Verstellringes (5) oder der gleichen mit einem voreilenden Einstellwinkel verstellbar sind und wobei dem jeweiligen Einstellwinkel der Schaufeln der einen Leitschaufelreihe ein zu diesem Winkel in einem bestimmten Verhältnis stehender Einstellwinkel der Schaufeln der anderen Leitschaufelreihe zugeordnet ist und — in Umfangsrichtung gesehen — jeweils zwischen zwei benachbarten Leitschaufeln (1, 1') der ersten Leitschaufelreihe (I) eine Leitschaufel (2') der zweiten Leitschaufelreihe (II) angeordnet ist, gekennzeichnet durch die gleichzeitige Anwendung der folgenden Merkmale:

a) das Verhältnis zwischen dem gegenseitigen Abstand (a) zweier benachbarter Leitschaufelmitten (3', 4') der ersten (I) und der zweiten (II) Leitschaufelreihe und dem Abstand (b) zweier benachbarter Leitschaufelmitten (3', 3) der Leitschaufeln der ersten Leitschaufelreihe (I) — jeweils in Umfangsrichtung gesehen — ist größer als 1 : 2,

b) bei positivem Drall (A) bildet der Hinterkantenbereich (1b; 1'b) einer Leitschaufel (1; 1') der ersten Leitschaufelreihe (I) mit dem Nasenbereich (2a; 2'a) einer Leitschaufel (2; 2') der zweiten Leitschaufelreihe (II) durch gegenseitige Überdeckung jeweils einen Kanal, der eine Beschleunigung der Strömung bewirkt;

c) bei negativem Drall (B) bildet der Hinterkantenbereich (1b) einer Leitschaufel (1) der ersten Leitschaufelreihe (I) mit dem Nasenbereich (2'a) einer Leitschaufel (2') der zweiten Leitschaufelreihe (II) durch gegenseitige Überdeckung ebenfalls jeweils einen Kanal, der eine Beschleunigung der Strömung bewirkt.

2. Vorrichtung nach Anspruch 1, dadurch gekennzeichnet, daß die im Verdichtergehäuse gelagerten Leitschaufeln (2, 1; 2', 1') über mit den Leitschaufeln fest verbundene Hebel (6, 7; 6', 7') an dem Verstellring (5) gelenkig angeschlossen sind, wobei die Hebel (7, 7') für die Schaufeln (1, 1') der ersten Leitschaufelreihe (I) länger sind als die Hebel (6, 6') für die Schaufeln (2, 2') der zweiten Leitschaufelreihe (II) und das Verhältnis des Verstellwinkels der ersten Leitschaufelreihe (I) zu dem Verstellwinkel der zweiten Leitschaufelreihe (II) durch das Längenverhältnis der kürzeren (6, 6') und der längeren Hebel (7, 7') bestimmt ist.

**Claims**

1. Appliance for controlling axial flow compressors by adjusting two stator blade rows (I, II) arranged lying one behind the other in the direction of flow with — relative to their longitudinal axes — symmetrical profile, and with the blades (1, 1'; 2, 2') set in their neutral position (blade positioning at 0° deviation from the direction of flow) parallel to the rotor axis, each arranged rotatable around a blade axis (3, 3'; 4, 4') (blade centre) fixed relative to the housing, whereby the blades (1, 1') of the front (first) stator blade row (I) lying in the direction of flow facing the blades (2, 2') of the following (second) stator blade row (II) lying in the direction of flow are adjustable to have a leading setting angle by means of an adjusting ring or similar device, and whereby the respective setting angle of the blades of one of the stator blade rows is allocated, at an angle having a certain relationship to this setting angle, a setting angle of the blades of the other stator blade row and — viewed around the circumference — arranged between each two adjacent blades (1, 1') of the first stator blade row (I) is a blade (2') of the second stator blade row (II), characterized by the simultaneous utilization of the following salient points:

a) The ratio of the mutual distance (a) between two adjacent blade centres (3', 4') of the first (I) and second (II) stator blade row to the distance (b) between two adjacent blade centres (3', 3) of the blades of the first stator blade row (I) is, in each case viewed around the circumference, greater than 1 : 2,

b) with positive flow incidence (A) the rear-edge area (1b; 1'b) of a blade (1; 1') of the first stator blade row (I) sets up a flow path with the nose area (2a; 2'a) of a blade (2; 2') of the second stator blade row (II) respectively through mutual overlapping which effects an acceleration of the flow,

c) with negative flow incidence (B) the rear-edge area (1b) of a blade (1) of the first stator blade row (I) also sets up a flow path with the lead-edge area (2'a) of a blade (2') of the second stator blade row (II) respectively through mutual overlapping which effects an acceleration of the flow.

2. Appliance to claim 1, characterized by the stator blades (2, 1; 2', 1') fitted in the compressor casing being swivel connected to the adjusting ring (5) by the levers (6, 7; 6', 7') firmly linked with the blades, the levers (7, 7') for the blades (1, 1') of the first stator blade row (I) being longer than the levers (6, 6') for the blades (2, 2') of the second stator blade row (II) and the relationship of the setting angle of the first stator blade row (I) to the setting angle of the second stator blade row (II) being determined by the relationship of the length of the shorter to the longer lever (7, 7').

**Revendications**

1. Dispositif pour la régulation de compresseurs axiaux par réglage du positionnement de deux rangées d'aubes directrices (I, II) situées l'une derrière l'autre dans le sens de l'écoulement avec — par rapport à leurs axes longitudinaux — profil symétrique et avec aubes directrices (1, 1', 2, 2') réglées dans leur position neutre (position de l'aube à 0° d'écart par rapport au sens d'écoulement) parallèlement à l'axe du rotor, chacune montée tournante autour d'un axe de rotation (3, 3', 4, 4') (centre aube) fixe sur le corps du compresseur, les aubes (1, 1') de la rangée avant (première) (I) dans le sens d'écoulement étant réglables par rapport aux aubes (2, 2') de la rangée suivante (seconde) (II) dans le sens d'écoulement au moyen d'un anneau de réglage (5) ou analogue avec un angle de calage anticipé, l'angle de calage des aubes de chacune des deux rangées correspondant l'un vis à vis de l'autre suivant un rapport déterminé, avec à chaque fois — vue dans le sens périphérique — une aube (2') de la seconde rangée (II) s'intercalant entre deux aubes voisines (1, 1') de la première rangée (I); caractérisé par l'utilisation simultanée des caractéristiques suivantes:

a) le rapport entre l'entr'axe sur plan perpendiculaire (a) de deux aubes voisines (3', 4') appartenant respectivement à la première (I) et à la seconde (II) rangée d'aubes et l'entr'axe (b) de deux aubes voisines (3', 3) de la première rangée (I) — vu à chaque fois dans le sens periphérique — est supérieur à 1 : 2;

b) en inclinaison positive (A), la partie arrière (1b, 1'b) d'une aube (1, 1') de la première rangée (I) forme à chaque fois avec la partie avant (2a, 2'a) d'une aube de la seconde rangée (II), par recouvrement réciproque, un canal qui provoque une accélération de l'écoulement;

c) en inclinaison négative (B), la partie arrière (1b) d'une aube (1) de la première rangée (I) forme également à chaque fois avec la partie avant (2'a) d'une aube (2') de la seconde rangée (II), par recouvrement réciproque, un canal qui provoque une accélération de l'écoulement.

2. Dispositif suivant spécification 1, caractérisé par le fait que les aubes directrices (2, 1; 2', 1') logées dans le corps du compresseur sont reliées de façon articulée à l'anneau de réglage (5) par l'intermédiaire des leviers (6, 7; 6', 7') reliés de façon fixe aux aubes, les leviers (7, 7') correspondant aux aubes (1, 1') de la première rangée (I) étant plus longs que les leviers (6, 6') correspondant aux aubes (2, 2') de la seconde rangée (II), et le rapport de l'angle de calage de la première rangée d'aubes (I) vis à vis de l'angle de calage de la seconde rangée d'arbres (II) étant déterminé par le rapport entre la longueur respective des leviers plus courts (6, 6') et des leviers plus longs (7, 7').

# F i g .1

Fig.2

Fig.3

Fig.4

Fig.5